# EUROPEAN PATENT SPECIFICATION

(11) **EP 1 728 370 B1**
(45) Date of publication and mention of the grant of the patent: **17.09.2008**
(21) Application number: 05717338.7
(22) Date of filing: 16.03.2005
(51) Int. Cl.: H04L 12/66, H04L 29/12

(54) **TRANSMISSION OF COMMUNICATION BETWEEN DATA TRANSMISSION NETWORKS**
KOMMUNIKATIONSÜBERTRAGUNG ZWISCHEN DATENÜBERTRAGUNGSNETZEN
TRANSMISSION DE COMMUNICATION ENTRE RESEAUX DE TRANSMISSION DE DONNEES

(30) Priority: 25.03.2004 FI 20045100
(43) Date of publication of application: 06.12.2006
(73) Proprietor: TeliaSonera Finland Oyj, 00510 Helsinki (FI)
(72) Inventor: KORHONEN, Jouni, FI-11100 Riihimäki (FI); JALKANEN, Tero, FI-00790 Helsinki (FI); LAUKKANEN, Jussi, FI-00180 Helsinki (FI)
(74) Representative: Rahkonen, Erkki Juhani
(86) International application number: PCT/FI2005/050085
(87) International publication number: WO 2005/094022

(56) References cited:
- EP-A2- 1 441 483
- WO-A1-03/088625
- US-A1- 2002 004 826
- US-A1- 2002 013 848
- US-A1- 2003 154 306
- US-A1- 2003 169 766
- US-B1- 6 769 031
- LI NORTEL NETWORKS: 'IP Private Address Identification (PAID); draft-yliteo-mobileip-paid-01.txt;' IETF STANDARD-WORKING-DRAFT no. 1, 17 November 1998, INTERNET ENGINEERING TASK FORCE, IETF, CH, XP015037138

## Description

The invention relates to a method, a system and a name server for the transmission of communication from a data transmission network to a receiving data transmission network.

In a multi-operator environment, i.e. in such a data network environment where an Internet connection can be provided for one terminal via several different service providers, the transmitting operator must know which network element of the receiver the transmission is performed to. Thus, the transmitting operator must know all the receiving network elements of the receiving operator in order for the transmission to be successful.

In known methods the operators have maintained different static lists or databases, where the network elements of the receiving operator are stored. In other words, each operator has stored data on the network elements used by each receiving operator. For example, for this purpose the GSM Association has provided an IR.21 database for solving operator roamings and interworking, which database has all the operator information necessary for forming connections.

In the communication between network operators, a problem can be detected between a closed DNS hierarchy (i.e. Domain Name Service) in an interconnection network and a DNS hierarchy of a public Internet connection, which problem relates to determining domain names. The domain server is used in a known manner in the Internet for converting domain names (FQDN, Fully Qualified Domain Name) into network addresses (such as IP addresses). In some situations, such as, for example, in the operation of an IMS service platform (IP Multimedia Subsystem), it is possible that such domain names have to be determined, which should not be found in a public DNS system, but which, however, have domains determined by a public DNS system. At the same time, said domain names should not be found in the DNS system of a closed interface network. For example, in the operation of an IMS system, it may be necessary to determine, on the basis of the domain name of an opposite operator, the network address of a corresponding I-CSCF element in order to route a message there. The necessary network address of the I-CSCF cannot, however, be queried from DNS servers in the Internet, because they cannot store the network addresses of the internal elements of operators for data security reasons.

D1: US2002004826 discloses a process for secure mail delivery in a computer-network environment. A receiving mail server, e.g. a home PC with an email application, receives a dynamic IP address and a code and registers them to a dynamic name server. Then a delivering mail server, e.g. a network email server with an email server application, utilises this code for resolving the dynamic IP address of the receiving mail server through a process of various requests from a private name server and the dynamic name server.

D2: WO03088625 discloses a solution for providing connectivity between two different address realms, an inside realm and an outside realm, by establishing connections through an intermediate gateway. The main purpose of the gateway is to direct traffic from the outside realm to inside realm, but the gateway also functions to other direction. The gateway maintains an address pool and a correct delivery is implemented by substituting the address-port-pair in the packet header with a realm-specific address through n-tuple substitution.

D3: US2003154306 discloses a method for accessing IP hosts on a private network from a public network by using a system, which carries out a port address translation for inbound connections to a private address on a proxy interface. The proxy interface is configured with only one public IP address and it acts as a translator, which resolves inbound connections and maps them to this IP address and a unique TCP or UDP port number.

D4 discloses a hierarchical addressing scheme (PAID) providing end-to-end host connectivity across different routing realms, wherein any private host can be provided with a globally unique identification without any modifications needed in address numbering. This is achieved through a two-tier address hierarchy including an address pair consisting of an IP address of a public router (PAID agent) of the realm and a private address of the host inside the realm. The end hosts must support GRE tunnelling, whereby the PAID address pair can be included in the GRE header field on the connection between the end hosts.

The static lists and configurations used in known methods do not provide a centralized or distributed solution for acquiring data. Static lists and configurations require maintenance, because there can be hundreds of cooperating operators and the server addresses in them may change or servers may be added or removed. Because of this, there is a need for an improved method and system form performing database queries. In addition, a method for determining the addresses of the internal network elements of the described IMS system is needed. The present invention provides one solution for meeting the above-described requirements.

As mentioned above, the present invention relates to the connections between data transmission networks of operators in a multi-operator environment, for example IMS environment. The purpose of the invention is to make it possible for the transmitting operator to query before forming a connection, the receiving operator for the data of the network element required for the transmission. By means of the invention the transmitting operator receives the necessary data of the servers of the receiving operator, which can typically be changing. As an example can be mentioned a network address of a multimedia messaging center, which is required for forming a connection to the center and for transmitting a multimedia message via an interface network. If desired, the receiving operator can change the network address of the multimedia messaging center or, for example, add another multimedia messaging center. Thus, it must be solved how the load is distributed and the messages are transmitted between these two centres.

The invention describes a method, by utilizing which it is possible, instead of direct fixed connections, to make a dynamic query to the private database of the receiving operator, which provides an answer on the properties of the required network element (such as, for example, the network address of the I-CSCF of the receiving operator). Thus, the transmitting operator does not have to maintain and store these properties.

With the system according to the present invention, the above-described problem of determining domain names can be addressed in such a manner that each operator knows only the address of a private name server of a roaming or interworking operator, which private name server is arranged to determine and store the desired domain names and network addresses of the internal elements of the operator. This kind of a method reduces the amount of statically formed data between roaming operators (because the operator does not need to know the addresses of the different servers of the roaming operator, but only the address of said private name server).

To put it more precisely, the present method, system and name server are primarily characterized by what is stated in the independent claims. Some embodiments are disclosed in the dependent claims.

With the present invention, no static lists are needed, which reduces manual work. Typically the operators change their own data, for example a network address may change, which results in that every interworking operator must manually update their own list or in some other manner change the addresses of communication. Automation reduces the possibility of human errors in, for example, updating network addresses.

Many problems are solved by providing the transmitting operator the address of only one internal database of the receiver. The transmitting operator can thus directly query from that database, for example, all the network addresses of multimedia messaging centres, in which case the receiver can freely vary the addresses of its own center without the transmitter having to update this data. The only information that the transmitting operator must have is the address of the private database of the receiver, all other required information can after that be directly queried from this database.

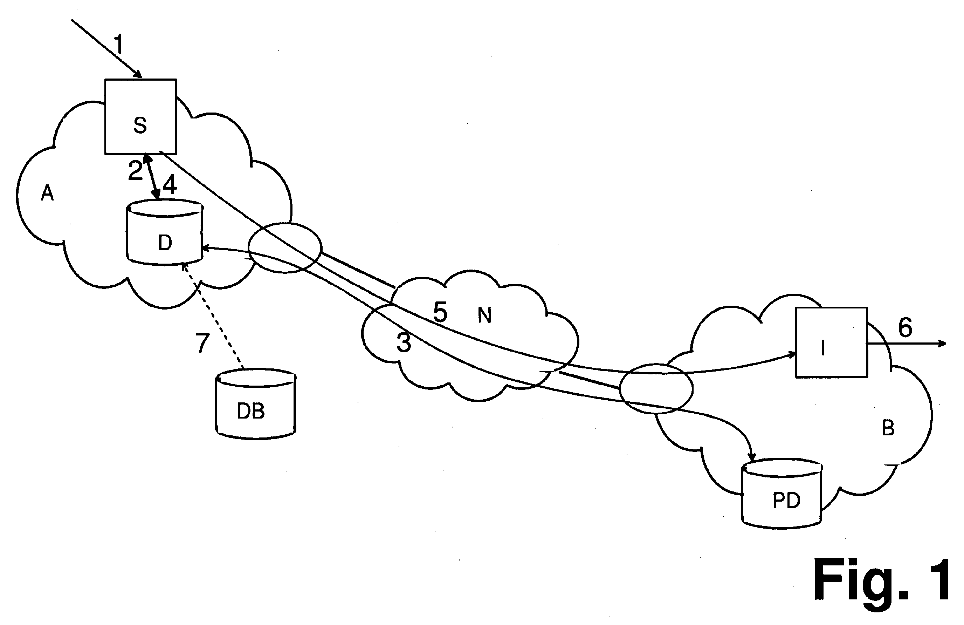

In addition, with the present invention the use of public domain names is possible in a private interface network. The invention is useful especially in a GRX network, where the DNS service of public Internet cannot be utilized because the GRX addresses must remain within the GRX network and they cannot be used outside said network. In the following, the invention will be described more in detail with reference to the appended drawings, in which
- Fig. 1: shows an example of a data network system, which utilizes the domain name server according to the invention.

Fig. 1 shows the main principle of the solution according to the invention. The system according to the invention comprises operator networks A, B and the network elements comprised by them, which are known as such, for example, domain name servers. The network elements comprised by the operator networks A, B depend on the network type in question and are known as such. For example, in Fig. 1 the operator networks A, B are IMS networks, in which case they comprise elements known for IMS networks, such as at least the I-CSCF and S-CSCF implementing the call/session control function. In the example of Fig. 1, the I-CSCF (Interrogating-CSCF) element I shown in the operator network B functions as a so-called contact point and forms an access to said operator network B. All the sessions addressed to a subscriber of the operator network B are first received in said element I. The control element S shown on the operator network A side, such as a S-CSCF element, performs session control services for the terminal. User registration and identification of registered users takes place in a known manner in this control element S, which can also handle session control on behalf of the registered users. For simplification, other elements belonging to the network have been left out of Fig. 1, because they operate in the method of the invention in a manner known as such and are not necessarily dependent on the arrangement according to the invention. In addition, it is to be noted that the operator networks A, B can comprise such elements, which are shown in connection with only one operator network A or B.

In addition, the operator network A may comprise a local name server D (DNS, Domain Name Server), which comprises a resolver, which converts, for example, fully qualified domain names (FDQN) into IP addresses in a manner known as such. In addition, it is possible to arrange a connection 7 to the operator network to an operator database DB, such as, for example, an IR.21 type operator database. In addition, according to the present invention, a private operator name server PD is arranged in the operator network B, which server stores the network addresses of the internal elements of the operator network and other necessary information for forming a connection.

The operation of the above-described system is described further with reference to Fig. 1. A subscriber of the operator network A, called A-subscriber, makes a connection (1), for example, by sending a SIP INVITE message to a subscriber of the operator network B, called B-subscriber (e.g. b.subscriber@operatorB.com). Both said subscribers are IMS subscribers in this example. The A-subscriber uses the public network address of the B-subscriber (such as IMS address, public SIP URL), where the area of the operator network B (operatorB.com) is a public registered domain name on the Internet. The control element S of the operator network A, here the S-CSCF element, takes care of directing the message toward the operator network B.

The control element S of the operator network A makes a query (2) to a local name server D. This local name server D comprises data about the network address of the private operator name server PD of the operator network B. The local name server D can have searched the desired address data, for example, form an operator database DB.

The local name server D (3) queries from the private name server PD of the operator network B the address of the contact point of said network B, such as the I-CSCF element. After receiving this, the local domain name server D of the operator network A transmits (4) the data to the control element S, which further transmits (5) the communication to the contact point I of the operator network B. This contact point I operates as access to the operator network B and thus routes the message further to the B subscriber.

With the system according to the described invention, the local name server D of the operator network A does not necessarily have to comprise more than one network address for each operator they have communication with. The private operator name server PD according to the invention comprises the network addresses of the servers of said network operator, in which case the operator network A must only know the address of said private operator name server PD. This private operator name server PD is, according to the invention, added to the operator network, and it does not directly belong to the interface network (such as GRX) or the public Internet. The private operator name server PD according to the invention can be based on a DNS solution or be, for example, a LDAP database (Lightweight Directory Access Protocol), which is a directory service known as such.

It is obvious that the system according to the invention can be implemented in some other type of network environment than said IMS system as well. Thus, the subscribers must also be subscribers of the network environment in question and thus the internal network elements of the data transfer networks can be characteristic to this network. It is obvious that the idea of the invention can be applied in connection with different network elements.

The invention is described above according to one embodiment. It is, however, to be noted that the solution according to the invention can be applied in other environments as well. Thus, the invention is not limited to the embodiment described above, but the features of the invention may vary within the scope of the appended claims.

## Claims

1. A method for determining an access point (I) in data transmission between a first operator network (A) and at least a second operator network (B), the first operator network (A) comprising a first name server (D) and the second operator network comprising an access point (I) for receiving communication from another operator networks, the method comprising:
in response to detecting a connection setup message from the first operator network (A) to the second operator network (B), querying (2) a network address of the access point of the second operator network (B) from said first name server (D);
**characterized by**
transmitting (3) the query from said first name server (D) to a second name server (PD) comprised by the second operator network (B), the second name server (PD) comprising network addresses of the access points of the second operator network (B);
determining a network address of the required access point in the second name server (PD);
transmitting (4) a query response including only the network address of the required access point to a control element (S) of the first operator network (A); and
setting up (5) a connection from the control element (S) of the first operator network (A) to the access point (I) of the second network (B) on the basis of the network address of the access point (I), the access point (I) of the second network (B) routing messages originated from the first operator network to intended network address in the second network (B)

2. The method according to claim 1, **characterized in that** said second name server (PD) is a domain name server comprising in a centralized manner the network addresses of the other network elements of said second operator network.

3. The method according to claim 1 or 2, **characterized in that** maintaining in said first name server (D) network address data of at least one second name server for each operator network, with which the first operator network is communicating.

4. A telecommunication system comprising:
a first operator network (A) and at least a second operator network (B), the first operator network (A) comprising a first name server (D) and a control element (S) for implementing call/session control function, and the second operator network comprising an access point (I) for receiving communication from another operator networks,
the control element (S) being arranged to query (2), in response to detecting a connection setup message from the first operator network (A) to the second operator network (B), a network address of the access point of the second operator network (B) from said first name server (D); **characterized in that**
said first name server (D) is arranged to transmit (3) the query to a second name server (PD) comprised by the second operator network (B), the second name server (PD) comprising network addresses of the access points of the second operator network (B);
the second name server (PD) is arranged to determine the network address of the required access point and transmit (4) a query response including only the network address of the required access point to the control element (S) of the first operator network (A);
the control element (S) of the first operator network (A) is arranged to set up (5) a connection to the access point (I) of the second network (B) on the basis of the network address of the access point (I); and
the access point (I) is arranged to manage the routing of messages originated from the first operator network to intended network address in the second network (B).

5. The system according to claim 5, **characterized in that** said second name server (PD) is a domain name server comprising in a centralized manner the network addresses of the other network elements of said second operator network.

6. The system according to claim 5 or 6, **characterized in that** the second name server is a LDAP database.

7. The system according to claim 5 or 6 or 7, **characterized in that** at least one of the operator networks is an IMS data transmission network and an interfacing network between the operator networks is a GRX network.

8. The system according to claim 8, **characterized in that** the access point (I) of the second network (B) is an I-CSCF contact point.

9. A name server (PD) for storing names, which name server (PD) is arranged in an operator network, wherein the name server is a private name server comprising network addresses of the access points (I) of the operator network (B), said access points (I) being arranged to receive communication from another operator network (A) comprising a control element (S) implementing a call/session_control function and to manage the routing of messages originated from said another operator network (A) to intended network address in the operator network (B), **characterized in that** the name server is arranged to
- receive a query from a name server (D) of the another operator network (A) regarding a network address of the access point of the operator network (B);
- determine, on the basis of the query, the network address of the required access point (I); and
- return only said network address of the access point (I) to the control element (S) of the another operator network (A), element (S).

10. The name server according to claim 10, **characterized in that** the name server is an LDAP database.

## Patentansprüche

1. Ein Verfahren zum Ermitteln eines Zugangsknoten (I) bei einer Datenübertragung zwischen einem ersten Anwender-Netzwerk (A) und mindestens einem zweiten Anwender-Netzwerk (B), wobei das erste Anwender-Netzwerk (A) einen ersten Name-Server (D) enthält und das zweite Anwender-Netzwerk (B) einen Zugangsknoten (I) zum Empfangen von Nachrichten von anderen Anwender-Netzwerken enthält, und wobei das Verfahren die folgenden Schritte umfasst:
- Abfragen (2) einer Netzwerkadresse des Zugangsknotens des zweiten Anwender-Netzwerkes (B) von dem ersten Name-Server (D) in Abhängigkeit einer Detektion einer Verbindungsaufbau-Nachricht von dem ersten Anwender-Netzwerk (A) zu dem zweiten Anwender-Netzwerk (B);
**gekennzeichnet durch**
- Übermitteln (3) der Abfrage vom ersten Name-Server (D) zu einem zweiten Name-Server (PD), der Teil des zweiten Anwender-Netzwerks (B) ist, wobei der zweite Name-Server (PD) Netzwerkadressen der Zugangsknoten des zweiten Anwender-Netzwerkes (B) enthält;
- Ermitteln einer Netzwerkadresse des benötigten Zugangsknotens in dem zweiten Name-Server (PD);
- Übermitteln (4) einer Abfrageantwort, die nur die Netzwerkadresse des benötigten Zugangsknotens enthält, zu einem Steuerelement (S) des ersten Anwender-Netzwerkes (A); und
- Herstellen (5) einer Verbindung von dem Steuerelement (S) des ersten Anwender-Netzwerkes (A) zu dem Zugangsknoten (I) des zweiten Anwender-Netzwerkes (B) basierend auf der Netzwerkadresse des Zugangsknotens (I), wobei der Zugangsknoten (I) des zweiten Anwender-Netzwerkes (B) die aus dem ersten Anwender-Netzwerk stammenden Nachrichten an die bestimmungsgemäßen Netzwerkadressen in dem zweiten Netzwerk (B) weiterleitet.

2. Ein Verfahren gemäß Anspruch 1, **dadurch gekennzeichnet, dass** der zweite Name-Server (PD) ein Domain-Name-Server ist, der in zentralisierter Art die Netzwerkadressen der anderen Netzwerkelemente des zweiten Anwender-Netzwerks enthält.

3. Ein Verfahren gemäß Anspruch 1 oder 2, **gekennzeichnet durch** Hinterlegen von Netzwerkadressdaten mindestens eines zweiten Name-Servers für jedes Anwender-Netzwerkes, mit dem das erste Anwender-Netzwerk kommuniziert, in dem ersten Name-Server (D).

4. Ein Nachrichtenübermittlungssystem umfassend:
- ein erstes Anwender-Netzwerk (A) und mindestens ein zweites Anwender-Netzwerk (B), wobei das erste Anwender-Netzwerk (A) einen ersten Name-Server (D) und ein Steuerelement (S), welches eine Anruf/Sitzungs-Steuerfunktion ausführt, enthält und das zweite Anwender-Netzwerk einen Zugangsknoten (I) zum Empfangen von Nachrichten von anderen Anwender-Netzwerken enthält,
- wobei das Steuerelement (S) zum Abfragen einer Netzwerkadresse des Zugangsknotens des zweiten Anwender-Netzwerkes (B) von dem ersten Name-Server (D) als Antwort auf eine Detektion einer Verbindungsaufbau-Nachricht von dem ersten Anwender-Netzwerk (A) zu dem zweiten Anwender-Netzwerk (B) eingerichtet ist;
**dadurch gekennzeichnet, dass**
- der erste Name-Server (D) zum Übermitteln (3) der Abfrage zu einem zweiten Name-Server (PD) des zweiten Anwender-Netzwerks eingerichtet ist, wobei der zweite Name-Server (PD) Netzwerkadressen der Zugangsknoten des zweiten Anwender-Netzwerkes (B) enthält;
- der zweite Name-Server (PD) zum Ermitteln der Netzwerkadresse des benötigten Zugangsknotens und zum Übermitteln (4) einer Abfrageantwort, die nur die Netzwerkadresse des benötigten Zugangsknotens enthält, zu dem Steuerelement (S) des ersten Anwender-Netzwerks (A) eingerichtet ist;
- das Steuerelement (S) des ersten Anwender-Netzwerkes (A) zum Herstellen (5) einer Verbindung zu dem Zugangsknoten (I) des zweiten Netzwerkes (B) basierend auf der Netzwerkadresse des Zugangsknotens (I) eingerichtet ist; und
- der Zugangsknoten (I) zum Steuern des Weiterleitens von von dem ersten Anwender-Netzwerk stammenden Nachrichten an die bestimmungsgemäßen Netzwerkadressen in dem zweiten Netzwerk (B) eingerichtet ist.

5. Das System gemäß Anspruch 5, **dadurch gekennzeichnet, dass** der zweite Name-Server (PD) ein Domain-Name-Server ist, der in zentralisierter Art die Netzwerkadressen der anderen Netzwerkelemente des zweiten Anwender-Netzwerkes enthält.

6. Das System gemäß Anspruch 5 oder 6, **dadurch gekennzeichnet, dass** der zweite Name-Server eine LDAP Datenbank ist.

7. Das System gemäß Anspruch 5 oder 6 oder 7, **dadurch gekennzeichnet, dass** mindestens eines der Anwender-Netzwerke ein IMS Datenübertragungsnetzwerk ist und ein Schnittstellen-Netzwerk zwischen den Anwender-Netzwerken ein GRX Netzwerk ist.

8. Das System gemäß Anspruch 8, **dadurch gekennzeichnet, dass** der Zugangsknoten (I) des zweiten Netzwerkes (B) ein I-CSCF Verbindungsknoten ist.

9. Ein Name-Server (PD) zum Speichern von Namen, der in einem Anwender-Netzwerk angeordnet ist, wobei der Name-Server ein nicht öffentlicher Name-Server ist, der Netzwerkadressen der Zugangsknoten (I) des Anwender-Netzwerkes (B) enthält, und wobei die Zugangsknoten (I) zum Empfangen von Nachrichten von einem anderen Anwender-Netzwerks (A), das ein Steuerelement (S), welches eine Anruf/Sitzungs-Steuerfunktion ausführt, enthält, und zum Steuern des Weiterleitens von dem anderen Anwender-Netzwerk (A) stammenden Nachrichten an die bestimmungsgemäßen Netzwerkadressen in dem Anwender-Netzwerk (B) eingerichtet sind, **dadurch gekennzeichnet, dass** der Name-Server eingerichtet ist zum
- Empfangen einer Abfrage von einem Name-Server (D) des anderen Anwender-Netzwerkes (A) bezüglich einer Netzwerkadresse des Zugangsknotens des Anwender-Netzwerkes (B);
- Ermitteln der Netzwerkadresse des benötigten Zugangsknotens (I) in Abhängigkeit der Abfrage; und
- Rückgeben nur der Netzwerkadresse des Zugangsknotens (I) an das Steuerelement (S) des anderen Anwender-Netzwerks (A).

10. Der Name-Server gemäß Anspruch 10, **dadurch gekennzeichnet, dass** der Name-Server eine LDAP Datenbank ist.

## Revendications

1. Procédé pour déterminer un point d'accès (I) au niveau d'une transmission de données entre un premier réseau d'opérateur (A) et au moins un second réseau d'opérateur (B), le premier réseau d'opérateur (A) comprenant un premier serveur de nom (D) et le second réseau d'opérateur comprenant un point d'accès (I) pour recevoir une communication en provenance d'autres réseaux d'opérateur, le procédé comprenant :
en réponse à la détection d'un message d'instauration de connexion en provenance du premier réseau d'opérateur (A) arrivant sur le second réseau d'opérateur (B), l'interrogation (2) d'une adresse de réseau du point d'accès du second réseau d'opérateur (B) auprès dudit premier serveur de nom (D) ;
**caractérisé par** :
la transmission (3) de l'interrogation depuis ledit premier serveur de nom (D) jusqu'à un second serveur de nom (PD) constitué par le second réseau d'opérateur (B), le second serveur de nom (PD) comprenant des adresses de réseau des points d'accès du second réseau d'opérateur (B) ;
la détermination d'une adresse de réseau du point d'accès requis dans le second serveur de nom (PD) ;
la transmission (4) d'une réponse d'interrogation incluant seulement d'adresse de réseau du point d'accès requis à un élément de commande (S) du premier réseau d'opérateur (A) ; et
l'instauration (5) d'une connexion depuis l'élément de commande (S) du premier réseau d'opérateur (A) jusqu'au point d'accès (I) du second réseau (B) sur la base de l'adresse du point d'accès (I), le point d'accès (I) du second réseau (B) routant des messages prenant leur origine auprès du premier réseau d'opérateur jusqu'à une adresse de réseau visée dans le second réseau (B).

2. Procédé selon la revendication 1, **caractérisé en ce que** ledit second serveur de nom (PD) est un serveur de nom de domaine comprenant d'une façon centralisée des adresses de réseau des autres éléments de réseau dudit second réseau d'opérateur.

3. Procédé selon la revendication 1 ou 2, **caractérisé par** le maintien dans le type premier serveur de nom (D) de données d'adresse de réseau d'au moins un second serveur de nom pour chaque réseau d'opérateur avec lequel le premier réseau d'opérateur est entrain de communiquer.

4. Système de télécommunication comprenant :
un premier réseau d'opérateur (A) et au moins un second réseau d'opérateur (B), le premier réseau d'opérateur (A) comprenant un premier serveur de nom (D) et un élément de commande (S) pour mettre en oeuvre une fonction de command d'appel/de session, et le second réseau d'opérateur comprenant un point d'accès (I) pour recevoir une communication en provenance d'autres réseaux d'opérateur,
l'élément de commande (S) étant agencé pour interroger (2), en réponse à la détection d'un message d'instauration de connexion en provenance du premier réseau d'opérateur (A) arrivant sur le second réseau d'opérateur (B), une adresse de réseau du point d'accès du second réseau d'opérateur (B) au niveau dudit premier serveur de nom (D),
**caractérisé en ce que** :
ledit premier serveur de nom (D) est agencé pour transmettre (3) l'interrogation à un second serveur de nom (PD) constitué par le second réseau d'opérateur (B), le second serveur de nom (PD) comprenant des adresses de réseau des points d'accès du second réseau d'opérateur (B) ;
le second serveur de nom (PD) est agencé pour déterminer l'adresse de réseau du point d'accès requis et pour transmettre (4) une réponse d'interrogation incluant seulement l'adresse de réseau du point d'accès requis à l'élément de commande (S) du premier réseau d'opérateur (A),
l'élément de commande (S) du premier réseau d'opérateur (A) est agencé pour instaurer (5) une connexion sur le point d'accès (I) du second réseau (B) sur la base de l'adresse de réseau du point d'accès (I) ; et
le point d'accès (I) est agencé pour gérer le routage de messages qui prennent leur origine auprès du premier réseau d'opérateur sur une adresse de réseau visée dans le second réseau (B).

5. Système selon la revendication 5, **caractérisé en ce que** ledit second serveur de nom (PD) est un serveur de nom de domaine comprenant d'une façon centralisée les adresses de réseau des autres éléments de réseau dudit second réseau d'opérateur.

6. Système selon la revendication 5 ou 6 **caractérisé en ce que** le second serveur de nom est une base de données LDAP.

7. Système selon la revendication 5 ou 6 ou 7, **caractérisé en ce qu'**au moins l'un des réseaux d'opérateur est un réseau de transmission de données IMS et un réseau d'interfaçage entre les réseaux d'opérateur est un réseau GRX.

8. Système selon la revendication 8, **caractérisé en ce que** le point d'accès (I) du second réseau (B) est un point de contact I-CSCF.

9. Serveur de nom (PD) pour stocker des noms, lequel serveur de nom (PD) est agencé dans un réseau d'opérateur, dans lequel le serveur de nom est un serveur de nom privé comprenant des adresses de réseau des points d'accès (I) du réseau d'opérateur (B), lesdits points d'accès (I) étant agencés pour recevoir une communication en provenance d'un autre réseau d'opérateur (A) comprenant un élément de commande (S) qui met en oeuvre une fonction de commande d'appel/de session et pour gérer le routage de messages qui prennent leur origine auprès dudit autre réseau d'opérateur (A) sur une adresse de réseau visée dans le réseau d'opérateur (B), **caractérisé en ce que** le serveur de nom est agencé pour :
- recevoir une interrogation en provenance d'un serveur d'un nom (D) de l'autre réseau d'opérateur (A) en ce qui concerne une adresse de réseau du point d'accès du réseau d'opérateur (B) ;
- déterminer, sur la base de l'interrogation, l'adresse de réseau du point d'accès requis (I) ; et
- retourner seulement ladite adresse de réseau du point d'accès (I) sur l'élément de commande (S) de l'autre réseau d'opérateur (A).

10. Serveur de nom selon la revendication 10, **caractérisé en ce que** le serveur de nom est une base de données LDAP.
